Europäisches Patentamt

European Patent Office

Office européen des brevets

(19)

(11) Veröffentlichungsnummer : **0 070 407**
**B1**

(12)
# EUROPÄISCHE PATENTSCHRIFT

(45) Veröffentlichungstag der Patentschrift :
01.10.86

(51) Int. Cl.⁴ : **B 60 T 15/06, B 60 T 8/18**

(21) Anmeldenummer : **82105545.6**

(22) Anmeldetag : **24.06.82**

(54) Zweikreis-Bremsventil für Kraftfahrzeuge.

(30) Priorität : **09.07.81 DE 3127108**

(43) Veröffentlichungstag der Anmeldung :
**26.01.83 Patentblatt 83/04**

(45) Bekanntmachung des Hinweises auf die Patenterteilung : **01.10.86 Patentblatt 86/40**

(84) Benannte Vertragsstaaten :
**FR GB IT**

(56) Entgegenhaltungen :
**EP-A- 0 026 346
DE-A- 2 820 107
DE-A- 2 820 142
DE-A- 2 825 559
DE-A- 2 939 907
DE-A- 3 127 108
DE-B- 1 505 371
DE-B- 2 548 973
FR-A- 2 453 762
US-A- 3 923 346**

(73) Patentinhaber : **Graubremse GmbH
Eppelheimer Strasse 76
D-6900 Heidelberg (DE)**

(72) Erfinder : **Grüner, Hans
Heidelberger Strasse 53
D-6803 Edingen-Neckarhausen (DE)**

(74) Vertreter : **Patentanwälte Dipl.-Ing. Rudolf Bibrach
Dipl.-Ing. Elmar Rehberg
Pütterweg 6 Postfach 738
D-3400 Göttingen (DE)**

## Beschreibung

Die Erfindung bezieht sich auf ein Zweikreis-Bremsventil für Fahrzeuge, insbesondere Kraftfahrzeuge, mit einem durch ein Betätigungsglied betätigbaren, die Druckhöhe in einer ersten Druckkammer steuernden ersten Kolben und einem die Druckhöhe in einer zweiten Druckkammer steuernden, in Betätigungsrichtung vom Druck der ersten Druckkammer in einer Steuerkammer und entgegengesetzt dazu ein einer Wiegekammer beaufschlagen zweiteilig ausgebildeten Relaiskolben, dessen Teile mit Anschlägen versehen sind, wobei die zweite Druckkammer letztlich mit den Randbremszylindern der Vorderachse und die erste Druckkammer letztlich mit den Radbremszylindern der Hinterachse verbindbar ist. Der Kolben und der Relaiskolben können dabei als starre Kolben oder auch als Membrankolben ausgebildet sein.

Die DE-B 1 505 371 zeigt ein Zweikreis-Bremsventil der eingangs beschriebenen Art, bei welchem der Relaiskolben, also der dem zweiten Bremskreis zugeordneten Steuerkolben, zweiteilig ausgebildet ist. Mit dieser Art der zweiteiligen Ausbildung wird eine Möglichkeit geschaffen, beim Ausfall der Vorratsluft im ersten Bremskreis nur einen Teil der Reaktionskraft in der Wiegekammer des Relaiskolbens als Gegenkraft auf die steuernde Fußkraft zu bekommen, um auf diese Art und Weise das Ventil und insbes. den zweiten Kreis mit geringen Kräften mechanisch betätigen zu können. Zu diesem Zweck sind auch die Anschläge zwischen den beiden Teilen der Relaiskolben so angeordnet, daß der äußere Kreisringkolben in Betätigungsrichtung auf dem inneren Kolbenteil aufliegt und dieses mitnimmt. Das innere Kolbenteil trägt einen Teil des Auslaßventils. Es ist nur eine einzige Steuerkammer vorgesehen, die beide Teile des Relaiskolbens ständig beaufschlagt. Der innere Kolbenteil des Relaiskolbens ist auf der üblichen Rückführfeder abgestützt. Die Kennlinie des ausgesteuerten Druckes in der Wiegekammer zu dem steuerkammerseitig eingesteuerten Steuerdruck wird durch die Zweiteiligkeit des Relaiskolbens in keiner Weise beeinfluß oder verändert. Trotz der Zweiteiligkeit gibt es beim Vorhandensein von Druck nur eine einzige steuerkammerseitig vorgesehene Wirkfläche und nur eine einzige wiegekammerseitig vorgesehene Wirkfläche.

Die DE-B 2 820 107 zeigt eine Zweikreis-Bremsanlage mit einem Zweikreis-Bremsventil, bei dem zwecks lastabhängiger Mitregelung der Vorderachse der Relaiskolben steuerkammerseitig an seinem einen Teil mit zwei voneinander getrennten Teilwirkflächen versehen ist, von denen die eine über den am Bremskreis der Hinterachse ausgesteuerten Druck direkt und die andere Teilwirkfläche über den von einem lastabhängig arbeitenden Bremsdruckregler ausgesteuerten Druck der Hinterachse beaufschlagt wird. Der Einfluß des automatisch lastabhängigen Bremskraftreglers wirkt sich dabei auf eine Teilfläche des Mehrstufenkolbens aus. Da mit dieser Art der Steuerung des Vorderachsbremsdruckes die Gefahr verbunden ist, daß bei Teilbremsungen die Vorderachse des Fahrzeuges überbremst wird, weil sich die dynamische Achslastverlagerung in solchen Teilbremsbereichen nur vergleichsweise wenig auswirkt, ist es aus der DE-B 2 820 107 weiterhin bekannt, in der Zuleitung zu der weiteren Wirkfläche oder bei Anordnung einer dritten Wirkfläche am mehrstufig ausgebildeten Relaiskolben in deren Zuleitung ein Überströmventil mit Rückströmung einzuschalten. Damit ergibt sich eine Erniedrigung des Bremsdruckes an der Vorderachse beim Anbremsen bzw. bei Teilbremsungen, die bei weitergehenden Bremsungen in Richtung auf die Vollbremsung aufgehoben wird. Mit der Anwendung eines solchen Überströmventils mit Rückströmung ist in der Kennlinie aber nur der Abknickpunkt einstellbar bzw. festlegbar, welcher die Druckuntersetzung in Teilbremsbereichen beendet. Durch Verwendung eines insoweit einteilig ausgebildeten Mehrstufenkolbens ist maximal eine Druckübersetzung im Verhältnis 1 : 1 erreichbar. Es ist beispielsweise nicht möglich, den zur Vorderachse ausgesteuerten Bremsdruck über das angegebene Verhältnis hinaus zu übersetzen.

Ebenfalls für die Regelung des Bremsdruckes im unteren Bremsbereich, also bei Teilbremsungen ist aus der US-A 3 769 997 ein Steuerventil durchsteuernder Bauart bekannt. Um einen Stufenkolben herum ist ein Ringkolben angeordnet, der zwischen sich und dem Stufenkolben eine vorgespannte Feder einschließt. Mit diesem gesondert, d. h. ggfs. zusätzlich zu einem Zweikreis-Bremsventil anzuwendenden Steuerventil ist es möglich, eine Überbremsung der Vorderachse bei Teilbremsungen zu vermeiden und den ausgesteuerten Bremsdruck in diesem Bereich vergleichsweise zurückzuhalten. Mit einem solchen Steuerventil durchsteuernder Bauart ist es ebenfalls nicht möglich, den ausgesteuerten Bremsdruck im Vergleich zum eingesteuerten Bremsdruck zu übersetzen, d. h. einen vergleichsweise höheren Bremsdruck auszusteuern. Für die Führung des Bremsdruckes oberhalb des Teilbremsbereiches und abweichend von einem Übersetzungsverhältnis 1 : 1 gibt auch diese Druckschrift keinen Hinweis.

Der Erfindung liegt die Aufgabe zugrunde, ausgehend von einem Zweikreis- oder Mehrkreis-Bremsventil der eingangs beschriebenen Art eine Beeinflussung der Kennlinie des ausgesteuerten Druckes für den zweiten Kreis im Bereich zwischen Teilbremsung und Vollbremsung zu erzielen, um hier im oberen Bremsbereich den Bremsdruck der Vorderachse gegenüber dem der Hinterachse definiert zu führen.

Erfindungsgemäß wird dies dadurch erreicht, daß der zweite Teil des Relaiskolbens auf einer vorgespannten Feder abgestützt ist und entweder wiegekammerseitig oder steuerkammerseitig eine jeweils zusätzlich zu der jeweiligen Wirkfläche des ersten Teils des Relaiskolbens vorhandene Teilwirkfläche aufweist, und daß die zwischen den beiden Teilen des Relaiskolbens vorgesehenen Anschläge bei wiegekammerseitiger Anordnung der Teilwirkfläche erst nach Überschreitung der Vorspannkraft der Feder unwirksam oder bei steuerkammerseitiger Anordnung der Teilwirkfläche erst nach Überschreitung der Vorspannkraft der Feder wirksam werden.

Mit anderen Worten wird der Relaiskolben mindestens zweiteilig ausgebildet, jedoch andersartig als im Stand der Technik und zur Lösung einer anderen Aufgabe.

Damit ist die grundsätzliche Möglichkeit gegeben, daß in dem zweiteiligen Relaiskolben drei Durchmesser unabhängig voneinander konstruktiv gewählt werden können, so daß damit die Kennlinie des über den Relaiskolben ausgesteuerten Druckes beeinflußt werden kann. Damit ist es nicht nur wie im Stand der Technik möglich, im Teilbremsbereich zunächst eine Druckuntersetzung herbeizuführen, um eine Überbremsung der Vorderachse in diesem Teilbremsbereich zu vermeiden. Durch die Anordnung der vorgespannten Feder, die selbstverständlich auch einstellbar ausgebildet sein kann, kann ein Abknickpunkt oder ein Abknickbereich festgelegt werden, der den Übergang zwischen einer Untersetzung und einer dazu vergleichsweisen Übersetzung darstellt. Diese Übersetzung kann sogar so groß gewählt werden, daß selbst vor Erreichen einer Vollbremsstellung an der Druckkammer des Bremsventils, die der Vorderachse zugeordnet ist, ein höherer Bremsdruck ausgesteuert wird als and der Druckkammer, die der Hinterachse zugeordnet ist.

Es ist also in Verbindung mit dem geteilten Relaiskolben möglich, eine größere Übersetzung als 1 : 1 zu erzielen. Die Wirkfläche des zweiten Teils des Relaiskolbens kann steuerkammerseitig angeordnet werden, wobei die Anordnung der Anschläge dann so zu treffen ist, daß ihre Auswirkung im Verlaufe eines vollen Bremshubes hinzutritt.

Auch die umgekehrte Anordnung ist möglich, nämlich die wiegekammerseitige Anordnung. Dann muß, da die Teilwirkfläche auf der anderen Seite des Relaiskolbens angeordnet ist, eine umgekehrte Wirkung erfolgen, nämlich die Teilwirkfläche muß bei Teilbremsungen wirksam sein und ihre Wirkung muß im Verlaufe eines vollen Bremshubes aufgehoben werden. Durch die freie Wahl der geometrischen Bedingungen bzw. der Durchmesser der Dichtungen an den einzelnen Teilen des Relaiskolbens, durch die konstruktive Gestaltung der vorgespannten Feder und ggfs. durch ihre Einstellbarkeit, kann die Kennlinie des ausgesteuerten Druckes für den zweiten Bremskreis bzw. die Vorderachse in weiten Grenzen variiert und dem jeweiligen Anwendungsfall angepaßt werden.

Eine Variation der Anpassung an ein anderes Fahrzeug ist mit vergleichsweise geringen Mitteln möglich, indem beispielsweise nur die Feder gegen eine andere Feder ausgetauscht oder die Feder anders eingestellt wird.

Dem Relaiskolben wird gleichsam ein Hilfskolben zugeordnet, der eine Teilwirkfläche mitbringt, die ohne Abdichtung auf der Seite der Steuerkammer oder auf der Seite der Wiegekammer gegenüber der jeweiligen Teilwirkfläche am unteren Teil des Relaiskolbens zur Wirkung kommt. Die Teilwirkfläche des Hilfskolbens wird immer gleichzeitig mit dem gleichen Druck in der gleichen Kammer beaufschlagt wie die jeweilige Teilwirkfläche des ersten Teils des Relaiskolbens, sei dies steuerkammerseitig oder wiegekammerseitig.

Es besteht aber auch die Möglichkeit, die Erfindung in Verbindung mit einem lastabhängig arbeitenden Bremsdruckregler einzusetzen, dessen ausgesteuerter Druck nicht nur den Bremsdruck der Hinterachse modifiziert, sondern auch an der Vorderachse seinen Einfluß mit ausübt.

Durch die erfindungsgemäße Ausbildung des Zweikreis-Bremsventils kann der ausgesteuerte Bremsdruck für die Vorderachse definiert im Verhältnis zu dem Bremsdruck an der Hinterachse festgelegt werden, und zwar im Bereich großer Bremsdrücke. Dies ist aber gerade der Bereich, in welchem sich die dynamische Achslastverlagerung besonders bemerkbar macht. In diesem Bereich vertragen die häufig auch größer dimensionierten Radbremsen der Vorderachse im Vergleich zu denen der Hinterachse durchaus auch einen höheren Bremsdruck als die der Hinterachse.

Bei wiegekammerseitiger Anordnung des zweiten Teils des Relaiskolbens kann der erste Teil des Relaiskolbens steuerkammerseitig eine größere Wirkfläche als wiegekammerseitig aufweisen, wobei zweckmäßig der größere Durchmesser des zweiten Teils des Relaiskolbens größer als der Druchmesser der steuerkammerseitigen Dichtung ausgebildet ist, so daß im Teilbremsbereich eine Untersetzung und anschließend daran im Bereich hoher Bremsdrücke eine Übersetzung erzielt wird. Die vorgespannte Feder, die in jedem Falle einmal an dem zweiten Teil des Relaiskolbens abgestützt ist, kann an dem ersten Teil des Relaiskolbens mit ihrem anderen Federauflager abgestützt sein, so daß sie als gefesselte Feder zwischen den beiden Teilen des Relaiskolbens wirksam wird und damit das Auslaßventil nicht belastet. Damit ist es in gleicher Weise möglich und sinnvoll, eine weiche oder eine harte vorgespannte Feder einzusetzen, um einmal einen Abknickpunkt und zum anderen einen Knickbereich zu erzielen.

Gehäuseseitig kann ein Abstützring zur Anlage des zweiten Teils des Relaiskolbens nach Überwindung der Kraft der vorgespannten Feder vorgesehen sein. An diesem Abstützring legt sich der zweite Teil des Relaiskolbens bei entsprechendem Druck in der Wiegekammer an, so daß auch bei weiterer Druckerhöhung nur die nunmehr kosntante Kraft über die vorgespannte Feder auf den ersten Teil des Relaiskolbens übertragen wird. Der erste Teil des Relaiskolbens kann mit seiner steuerkammerseitigen Dichtung an dem Abstützring geführt sein. Damit ergibt sich gleichzeitig die Möglichkeit einer erleichterten Montage. Ferner kann der Durchmesser der steuerkammerseitigen Dichtung des ersten Teils des Relaiskolbens in Verbindung mit der Ringbreite des Abstützrings jeweils unterschiedlich gewählt werden, um unterschiedliche Kennlinien bei Verwendung eines gleich ausgebildeten Gehäuses des Bremsventils zu erzielen. Es ist dann lediglich der erste Teil des Relaiskolbens und der Abstützring auszutauschen.

Die besondere Berücksichtigung der lastabhängigen Schwerpunktsveränderung in Verbindung mit einem lastabhängig arbeitenden Bremsdruckregler und der daraus resultierenden dynamischen Achslastverlagerung wird dann erreicht, wenn dem Relaiskolben steuerkammerseitig ein Druckuntersetzungsventil vorgeschaltet wird, welches eine Wirkfläche aufweist, die in einer Steuerkammer von dem vom Bremsdruckregler ausgesteuerten geregelten Bremsdruck des Hinterachsbremskreises beaufschlagt wird. Der Abstützring kann dann zugleich einen Anschlag für einen Kolben dieses Druckuntersetzungsventils bilden.

Dieses Druckuntersetzungsventil ist koaxial zwischen dem ersten Kolben und dem Relaiskolben und zwischen diesen vorgesehen. Es weist einen Stufenkolben auf, der einen eingezogenen Rand besitzt, wobei auf einem Fortsatz des Relaiskolbens ein mit dem eingezogenen Rand ein Durchgangsventil bildender Ventilkörper dichtend verschiebbar gelagert ist.

Bei steuerkammerseitiger Anordnung des zweiten Teils des Relaiskolbens kann der erste Teil des Relaiskolbens steuerkammerseitig eine kleinere Wirkfläche als wiegekammerseitig aufweisen, so daß im Teilbremsbereich eine Knickregelung erreicht wird. Erst im Anschluß an den Teilbremsbereich bis zur Vollbremsung wird dann die Übersetzung erreicht, indem sich nach Überschreiten der Kraft der vorgespannten Feder die Wirkfläche des zweiten Teils des Relaiskolbens hinzuaddiert, so daß dann eine Übersetzung erreicht wird. Die vorgespannte Feder ist dabei gehäuseseitig abgestützt. Damit ergibt sich lediglich ein Abknickpunkt, der aber durchaus erwünscht ist. Außerdem wird bei dieser Anordnung das Auslaßventil des zweiten Kreises durch die vorgespannte Feder nicht belastet.

Ein, mehrere oder alle Teile des Relaiskolbens können aus starrem Material mit entsprechenden eingelegten Dichtungen ausgebildet werden oder auch als Membrankolben. Beispielsweise kann der Relaiskolben steuerkammerseitig als Membrankolben ausgebildet sein, wobei der zweite Teil des Relaiskolbens von einem steuerkammerseitig an der Membran anliegenden Gehäuserand und einem die Membran auf der Rückseite abstützenden Teller gebildet ist.

Ausführungsbeispiele der Erfindung sind in der zeichnung dargestellt und werden im Folgenden näher beschrieben. Es zeigt :

Figur 1 einen Vertikalschnitt durch ein Zweikreis-Bremsventil in einer ersten Ausführungsform,

Figur 2 einen Vertikalschnitt durch ein Zweikreis-Bremsventil in einer zweiten Ausführungsform mit lastabhängiger Mitregelung der Vorderachse,

Figur 3 den wesentlichen Teil eines Zweikreis-Bremsventils in einer dritten Ausführungsform,

Figur 4 eine weitere Ausbildungsmöglichkeit des Zweikreis-Bremsventils,

Figur 5 ein Kennliniendiagramm der ausgesteuerten beiden Drükke bei Verwendung einer harten vorgespannten Feder und

Figur 6 ein Kennliniendiagramm der Ausführungsform nach Fig. 2 mit Verwendung einer weichen vorgespannten Feder und dem Einfluß eines Achslast abhängig gesteuerten Bremsdruckreglers.

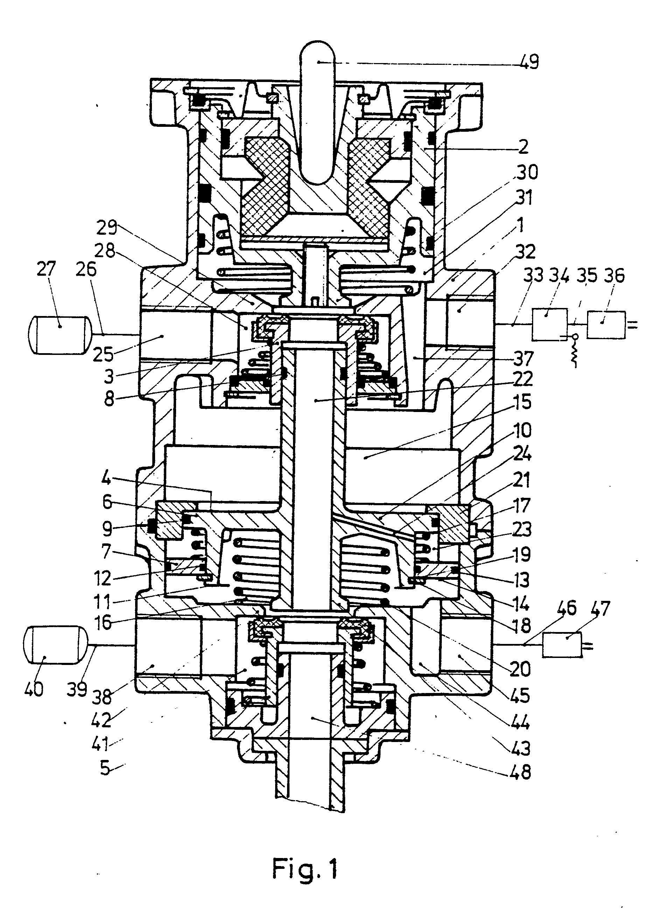

Das in Fig. 1 dargestellte Zweikreis-Bremsventil besitzt ein mehrteilig ausgebildetes Gehäuse 1, welches in seinem oberen Teil einen ersten Kolben 2 und einen zugehörigen Doppelventilkörper 3 aufnimmt, die dem ersten Bremskreis, insbes. für die Hinterachse des Fahrzeuges bestimmt, zugeordnet sind. Im unteren Bereich des Gehäuses 1 ist ein Relaiskolben 4 vorgesehen, der mit einem zugehörigen Doppelventilkörper 5 zusammenarbeitet und dem zweiten Bremskreis, insbes. der Vorderachse, zugeordnet ist. Der Relaiskolben 4 ist zweiteilig ausgebildet und besteht aus einem inneren Teil 6 und einem äußeren Teil 7. Der innere Teil 6 des Relaiskolbens 4 ist über eine Dichtung 8 im Doppelventilkörper 3 dichtend geführt und besitzt eine Dichtung 9, die eine steuerkammerseitig gebildete Teilwirkfläche 10 nach außen begrenzt. Der Teil 6 des Relaiskolbens 4 besitzt wiegekammerseitig eine Teilwirkfläche 11, die nach außen durch eine Dichtung 12 zwischen den beiden Teilen 6 und 7 des Relaiskolbens 4 begrenzt wird. Der Teil 7 besitzt auf seinem äußeren Umfang eine weitere Dichtung 13, die seine Teilwirkfläche 14 zwischen den Dichtungen 12 und 13 begrenzt. Die Teilwirkfläche 10 ist auf der Seite einer Steuerkammer 15 dem eingesteuerten Druck für den zweiten Kreis ausgesetzt, während die beiden Teilwirkflächen 11 und 14 auf der Seite einer Wiegekammer 16 dem am zweiten Kreis ausgesteuerten Druck ausgesetzt sind. Zwischen den beiden Teilen 6 und 7 des Relaiskolbens 4 ist eine vorgespannte Feder 17 als gefesselte Feder vorgesehen, die bestrebt sit, die beiden Teile 6 und 7 über an ihnen vorgesehene Anschläße 18 und 19 in Anlage aneinander zu halten. Eine übliche Rückführfeder 20 stützt den Teil 6 des Relaiskolbens 4 gehäuseseitig ab. Die Dichtung 9 möge einen Durchmesser D1, die Dichtung 12 einen Durchmesser D3 und die Dichtung 13 einen Durchmesser D4 aufweisen. Die Breite eines Anschlagringes 21, der gehäuseseitig ortsfest gelagert ist, ist in Abstimmung auf den Durchmesser D1 der Dichtung 9 und damit die Größe der Teilwirkfläche 10 des Relaiskolbens 4 gewählt. Der Teil 6 des Relaiskolbens 4 ist hohl ausgebildet und besitzt eine Bohrung 22, die zur Atmosphäre führt. Ein Raum 23 zwischen den beiden Teilen 6 und 7 des Relaiskolbens, in dem die vorgespannte Feder 17 angeordnet ist, steht über einen Kanal 24 entlüftet mit der Atmosphäre dauernd in Verbindung.

Das Gehäuse 1 besitzt in seinem in Fig. 1 oberen, vorzugsweise der Hinterachse des Fahrzeuges zugeordneten ersten Bremskreis einen Anschluß 25 für eine Leitung 26, die von einem Vorratsbehälter 27 herangeführt ist, so daß in einer Vorratskammer 28 begeschlossenem Einlaßventil Vorratsdruck ansteht. Zwischen einem vorspringenden Gehäuserand 29 und dem Doppelventilkörper 3 wird das Einlaßventil 3, 29 des ersten Bremskreises gebildet. Ein Fortsatz 30 an dem ersten Kolben 2 bildet in Verbindung mit dem Doppelventilkörper 3 ein Auslaßventil 3, 30 des ersten Kreises. Unterhalb des ersten Kolbens 1 ist eine Wiege- bzw. Druckkammer 31 vorgesehen, die über einen Anschluß 32 und eine Leitung 33 in dauernder Verbindung mit einem achslastabhängig gesteuerten Bremskraftregler 34 in Verbindung steht, von dem eine Leitung 35 zu den Bremszylindern 36 der Hunterachse bzw. des ersten Bremskreises führt. Über diesen ersten Kreis wird in der Druckkammer 31 ein Druck ausgesteuert, der in den Diagrammen mit $P_{2HA}$ bezeichnet ist. Über einen an die Druckkammer 31 angeschlossenen Kanal 37 steht dieser ausgesteuerte Druck mit der Steuerkammer 15 des zweiten Kreises in dauernder Verbindung.

Das Gehäuse 1 besitzt einen weiteren Anschluß 38, an den eine Leitung 39 eines Vorratsbehälters 40 für Vorratsluft herangeführt ist, die in einer Vorratskammer 41 ansteht. Der Doppelventilkörper 5 bildet mit einem eingezogenen Gehäuserand 42 ein Einlaßventil 5, 42 des Kreises II, während von einem Fortsatz 43 an dem Relaiskolben 4 bzw. seinem Teil 6 ein Auslaßventil 5, 43 des Bremskreises II gebildet ist. Die Wiegekammer 16 steht mit einer Druckkammer 44 in dauernder Verbindung, von der über einen Anschluß 45 eine Leitung 46 zu Bremszylindern 47 des zweiten Bremskreises bzw. der Vorderachse des Fahrzeuges führt. Beide Doppelventilkörper 3 und 5 sind zum Zwecke der Entlüftung und des Anschlusses an die Bohrung 22 bzw. einen Kanal 48 hohl ausgebildet und an die Atmosphäre angeschlossen. Über ein Betätigungsglied 49 kann das Bremsventil beispielsweise über eine Trittplatte betätigt werden.

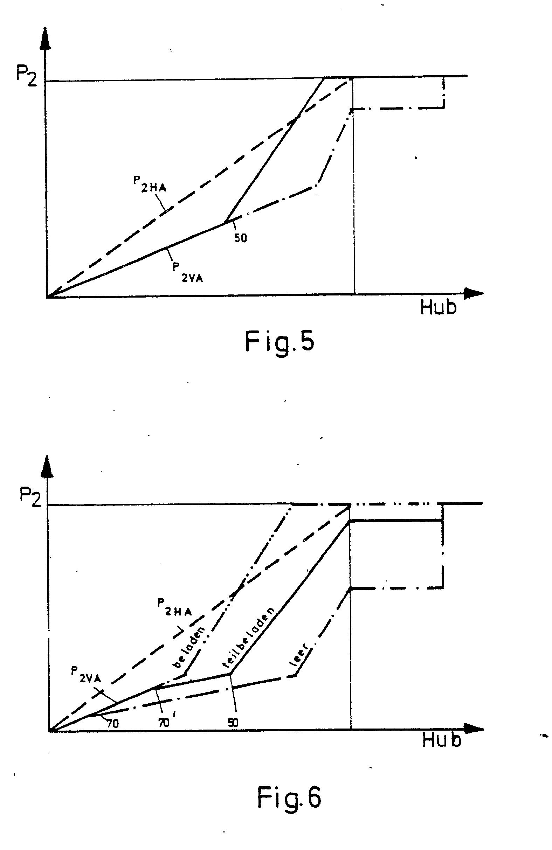

Die Wirkungsweise des Zweikreis-Bremsventils nach Fig. 1 wird anhand der Kennlinien der Fig. 5 erläutert. Die Kennlinien sind tendenzmäßig und unter der Voraussetzung gezeichnet, daß

$$D3 < D1 < D4$$

konstruktiv gewählt ist, wie dies in Fig. 1 dargestellt ist. Es ist der in den Druckkammers 31 bzw. 44 jeweils ausgesteuerte Bremsdruck über dem Hub des Zweikreis-Bremsventils dargestellt. Eine waagerechte Linie stellt den Vorratsdruck der Vorratsbehälter 27 und 40 dar, die der Einfachheit halber als gleich groß angenommen wurden. Die gestrichelte Linienführung stellt den ausgesteuerten Druck $P_{2HA}$ in der Druckkammer 31 dar, wenn das Zweikreis-Bremsventil durch Niederdrücken des Betätigungsgliedes 49 betätigt wird, also je nach Hub jeweils eine Abschlußstellung nach dem Schließen des Auslaßventils 3, 30 und dem Öffnen des Einlaßventils 3, 29 mit nachfolgendem Schließen — je nach Hub — auftritt. Damit wird je nach Hub ein bestimmter Bremsdruck in Richtung auf den lastabhängigen Bremskraftregler 34 und damit letzlich über diesen ein noch weiter modifizierter Bremsdruck zu den Bremszylindern 36 der Hinterachse ausgesteuert.

Der in der Druckkammer 31 ausgesteuerte Bremsdruck gelangt über den Kanal 37 in die Steuerkammer 15 und damit als Steuerdruck auf die Teilwirkfläche 10. Das Auslaßventil 5, 43 des Kreises II wird geschlossen und das Einlaßventil 5, 42 geöffnet, so daß aus der Vorratskammer 41 Druckluft in die Wiegekammer 16 und damit über die Druckkammer 44 und die Leitung 46 zu den Bremszylindern 47 der Vorderachse ausgesteuert wird. Diese in der Druckkammer 44 bzw. der Wiegekammer 16 ausgesteuerte Druck $P_{2VA}$ wird in der Wiegekammer 16 auf die beiden Teilwirkflächen 11 und 14 der Teile 6 und 7 des Relaiskolbens 4 ein. Es entsteht — je nach Hub — eine Abschlußstellung, in welcher das Einlaßventil 5, 42 und das Auslaßventil 5, 43 geschlossen sind. Dieser Druck möge noch nicht ausreichen, um die vorgespannte Feder 17 zusammenzudrücken, so daß die Anschläge 18 und 19 weiterhin in Anlage aneinander sind. Damit aber wird eine Druckuntersetzung im Verhältnis der Wirkfläche 10 zu der Summe der Wirkflächen 11 und 14 erreicht, die sicht in einem vergleichsweise flacher ansteigenden Ast de Fig. 5 äußert. Dies stellt den Teilbremsbereich dar, in welchem also die Vorderachse vor Überbremsung geschützt wird. Diese Druckuntersetzung im Teilbremsbereich endet gemäß Fig. 5 in einem ersten Abknickpunkt 50, der dann erzielt wird, wenn eine weiche vorgespannte Feder 17 angeordnet ist, während deren Hub sich praktisch die Kraft nicht ändert. Die gleichen Verhältnisse ergeben sich bei Verwendung einer harten vorgespannten Feder 17. An dem Abknickpunkt 50 setzt der Teil 7 des Relaiskolbens 4 auf dem Anschlagring 21 auf. Eine weitere Zusammendrückung der Feder 17 ist nicht mehr möglich. Da sich die Geometrie der Feder 17 nicht mehr ändert, ist auch bei weiterer Vergrößerung des Hubes des Zweikreis-Bremsventils die von der Feder 17 übertragene Kraft nicht mehr veränderbar, sondern konstant.

Die Teilwirkfläche 14 büßt in diesem Moment in großem Umfange ihre Wirksamkeit ein, so daß im Wesentlichen eine Druckübersetzung resulterit, die vom Verhältnis der Teilwirkfläche 10 zu der Teilwirkfläche 11 bestimmt ist. Da der Durchmesser der Dichtung 8 und der Durchmesser des Auslaßventils 5, 43 etwa gleich ausgebildet sind, erkennt man, daß die Teilwirkfläche 10 wesentlich größer als die Teilwirkfläche 11 ist, so daß die durchgezogene Linie in der Fig. 5 mit einer vergleichsweise steileren Steigung ansteigt. Dieser Anstieg kann ja nach der Lage des Abknickpunktes 50 so weit gehen, daß im Vergleich zu dem in der Druckkammer 31 ausgesteuerten Druck $P_{2HA}$ eine Druckübersetzung erfolgt bzw. ein höherer Druck in der Druckkammer 44 ausgesteuert wird, was bei Verwendung eines Mehrstufenkolbens als Relaiskolben 4 nicht möglich ist.

Man sieht also, daß hier am Bremskreis der Vorderachse bereits vor Erreichen des maximalen Hubes der maximale Vorratsdruck ausgesteuert wird, eine sehr sinnvolle Maßnahme, um die Sicherheit des Fahrzeuges im Bereich einer Voll- bzw. Notbremsung zu erhöhen. In diesem Bereich wirkt sich die dynamische Achslastverlagerung besonders aus, daß die Vorderachse — im Zusammenhang mit dort ggfs. größer dimensionierten Bremszylindern durchaus auch stärker zur Abbremsung herangezogen werden kann als die Hinterachse..

Die strichpunktierte Linienführung in der Fig. 5 ist die Kennlinie, die sich bei einer anderen Vorspannung der Feder 17 ergibt. Wird die Feder 17 so ausgelegt oder eingestellt, daß in Verbindung mit der Wirkfläche 14 die eingestellte Kraft der Feder 17 höher ist bzw. die Anlage am Anschlagring 21 erst später erreicht wird, dann verschiebt sich ein Teil der Kennlinie so, wie dies strichpunktiert angedeutet ist. Da das Diagramm der Fig. 5 nur die Tendenz aufzeigt, ist insbes. klar, daß die konstruktive Auslegung auch so gewählt werden kann, daß bei maximalen Hub gerade in beiden Kreisen der volle Vorratsdruck ausgesteuert wird, sofern dies erwünscht ist.

Die Verlängerung der strichpunktierten Kennlinie über den Bereich maximalen Hubes hinaus zeigt die mechanische Durchsteuerung des Zweikreis-Bremsventils, bei der letztlich das Einlaßventil 5, 42 offengehalten wird.

Besonders bemerkenswert an den Kennlinien der Fig. 5 ist, daß im Bereich einer Vollbremsung bzw. vor Erreichen der Vollbremsung an der Vorderachse schon der volle Vorratsdruck ausgesteuert wird, während der Bremsdruck der Hinterachse vergleichsweise geringer gehalten wird unt trotzdem eine Überbremsung der Vorderachse im Teilbremsbereich vermieden wird.

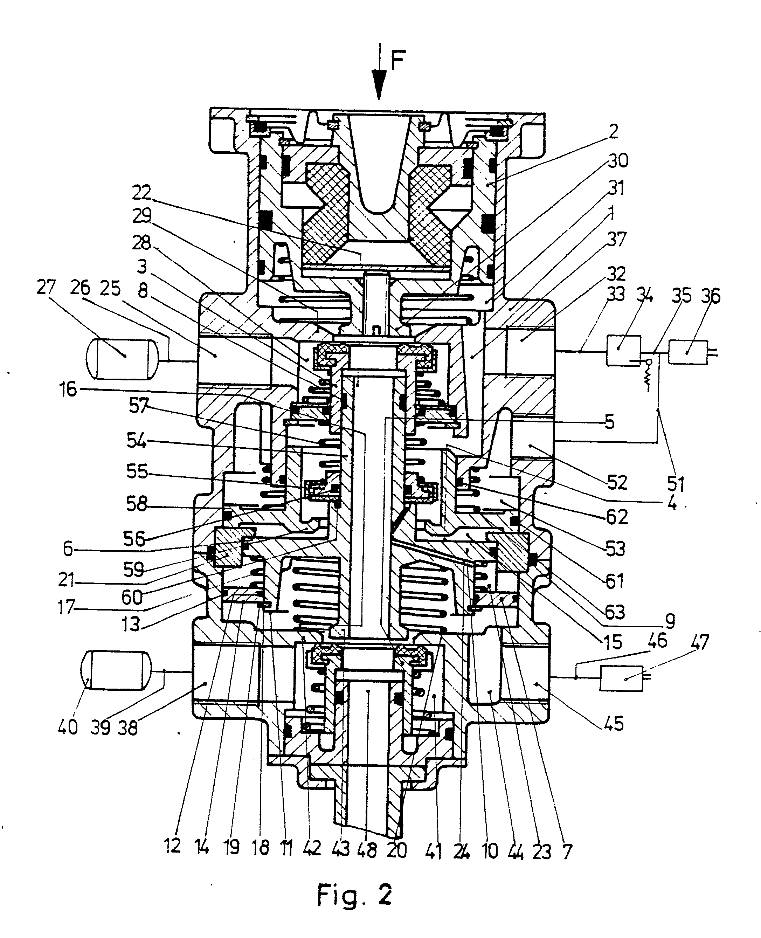

Das Ausführungsbeispiel des Zweikreis-Bremsventils nach Fig. 2 ist zunächst auf dem Ausführungsbeispiel der Fig. 1 aufgebaut. Für gleiche Teile sind gleiche Bezugszeichen verwendet. Zusätzlich ist hier jedoch der zur Vorderachse ausgesteuerte Bremsdruck noch moduliert, und zwar unter Mitwirkung des von dem lastabhängigen Bremskraftregler 34 zur Hinterachse ausgesteuerten Bremsdruckes. Zu diesem Zweck führt eine Leitung 51 zu einem Anschluß 52 einen Druckraumes 53. Der Teil 6 des Relaiskolbens 4 besitzt einen Fortsatz 54, um den herum ein Ventilkörper 55 mit Hilfe einer Dichtung 56 dichtend und gleitend geführt ist, der isch im übrigen über eine Feder 57 gehäuseseitig abstützt. Der Ventilkörper 55 gehört zu einem Stufenkolben 58, der einen eingezogenen Rad 59 aufweist, der mit dem Ventilkörper 55 ein Durchgangsventil 55, 59 bildet. Im übrigen ist an dem Fortsatz 54 ein Bund 60 vorgesehen, gegen den sich der Ventilkörper 55 ansonsten anlegt. Der Sufenkolben 58 besitzt auf seinem Außendurchmesser eine Dichtung 61, mit der er im Gehäuse 1 geführt ist. Eine Dichtung 62 teilt den Druckraum 53 ab, der vom ausgesteuerten Druck des lastabhängigen Bremskraftreglers 34 beaufschlagt wird. Zwischen dem Stufenkolben 58 und dem Relaiskolben 4 ist die Steuerkammer 15 angeordnet, die über das geöffnete Durchgangsventil 55, 59 und den Kanal 37 mit der ersten Druckkammer 31 bzw. dem ausgesteuerten Druck am Anschluß 32 in Verbindung steht. Der Stufenkolben 58 des Druckuntersetzungsventils 55, 58 kann in Betätigungsrichtung, also in dem Druckraum 53 von einer Feder 63 belastet sein, die vorzugsweise in ihrer Kraft einstellbar (nicht dargestellt) ausgebildet sein kann. Die maximale Bewegung des Stufenkolben 58 ist durch den Anschlagring 21 oder einen anderen Anschlag begrenzt, wobei der Anschlagring 21 gleichzeitig als Anschlag des Relaiskolbens 4 dient, so daß sich der Stufenkolben 58 nicht direkt an dem Relaiskolben 4 anlegen kann und diesen daher nicht direkt kraftmäßig beaufschlagt. Selbstverständlich findet über den pneumatischen Druck in der Steuerkammer 15 eine gegenseitige kraftmäßige Beaufschlagung statt. Auch durch die Wahl der Kraft der Feder 63 in Verbindung mit der geometrischen Ausbildung des Druckuntersetzungsventils 55, 58 kann auf die Kennlinie des zu den Bremszylindern 47 der Vorderachse ausgesteuerten Druckes Einfluß genommen werden. Insbesondere kann die Reihenfolge des Ansprechens der beiden Federn 17 und 63 festgelegt oder aufeinander abgestimmt werden.

Die Wirkungsweise des Zweikreis-Bremsventils nach Fig. 2 ist zunächst einmal demjenigen der Fig. 1 analog, wobei zusätzlich die Vorderachse lastabhängig noch mitgeregelt wird. Es wirkt sich also der Beladungszustand des Fahrzeuges insbes. bei der dynamischen Achslastverlagerung aus. Die Kennlinie des Zweikreis-Bremsventils nach Fig. 2 ist in Fig. 6 dargestellt. Die durchgezogene Linienführung zeigt den Zustand teilbeladen. Die strichpunktierte Linie entspricht dem leeren Fahrzeug. Die doppelt gepunktete Linie entspricht dem vollbeladenen Fahrzeug und ist damit identisch mit der Kennlinie gemäß Fig. 5. Dies ist verständlich, weil bei einem vollbeladenen Fahrzeug der lastabhängige Bremskraftregler 34 ein Übersetzungsverhältnis von 1 : 1 aussteuert. Die Fig. 6 zeigt Kennlinien, die unter Verwendung einer weichen Feder 17 zustande kommen, also jeweil ein Abknickpunkt 50 realisiert wird, an den sich jeweils ein übersetzter Kennlinienteil anschließt, wie er sich bei Voraussetzung der Durchmesser

$$D3 < D1 < D4$$

ergibt. Es wurde bei Fig. 6 weiterhin vorausgesetzt, daß im Verlauf eines Hubes zuerst die achslastabhängige Mitregelung anspricht, wodurch die Knickpunkte 70 und 70' entstehen, noch bevor jeweils die vorgespannte Feder 17 anspricht und der Abknickpunkt 50 erreicht wird. Es ist ersichtlich, wie im vollbeladenen Zustand diese Abknickpunkte zusammenfallen.

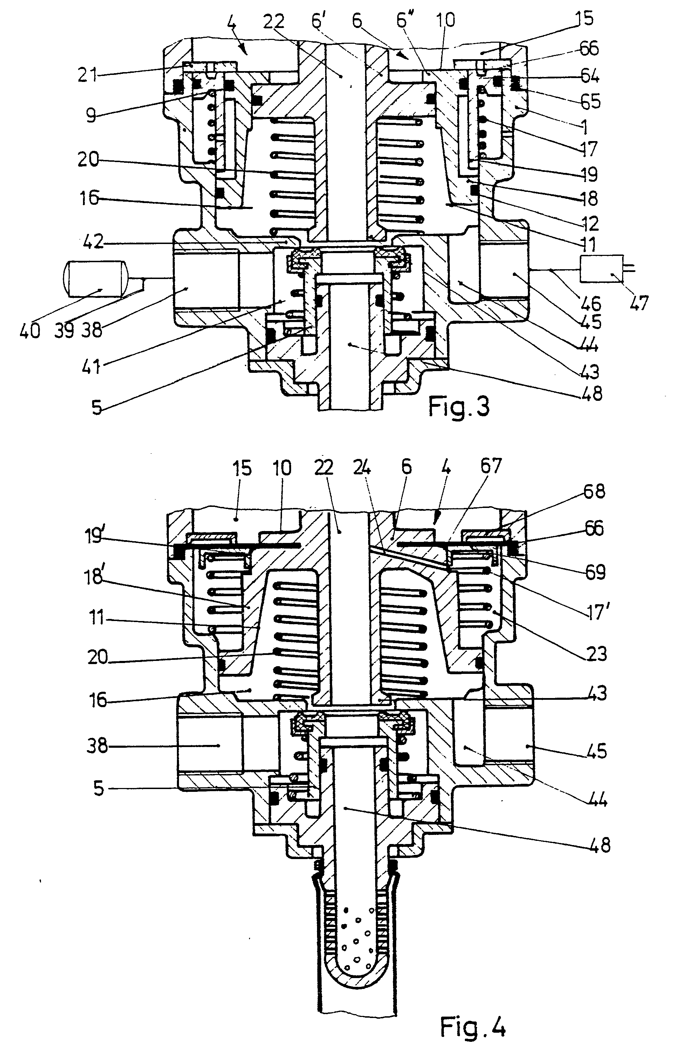

Fig. 3 zeigt eine weitere Ausbildungsform des Zweikreis-Bremsventils, welches mit oder ohne achslastabhängiger Mitregelung der Vorderachse verwirklicht werden kann, wie dies grundsätzlich anhand der Fig. 1 bzw. 2 aufgezeigt wurde. Im Gegensatz zu den beiden zuvor beschriebenen Ausführungsformen ist jedoch anstelle des wiegeseitigen Teils 7 des Relaiskolbens 4 ein steuerkammerseitiger Teil 64 vorgesehen, der die Dichtung 65 besitzt, welcher der Durchmesser D2 zugeordnet ist. Eine vorgespannte Feder 17' ist hier zwischen dem Teil 64 und dem Gehäuse 1 vorgesehen, deren Funktion im wesentlichen der Feder 17 entspricht. Man sieht, daß hier der Teil 64 auf der anderen Seite des Teils 6 des Relaiskolbens 4 angeordnet ist, so daß hier eine Teilwirkfläche 66 gebildet ist. Diese Teilwirkfläche 66 ist zusätzlich zu der Teilwirkfläche 10 steuerkammerseitig angeordnet, während wiegekammerseitig lediglich die einzige Teilwirkfläche 11 vorgesehen ist. Wie man sieht, kommt zunächst die Teilwirkfläche 66 bei Beginn einer Bremsung nicht zur Wirkung. Erst nach Überschreitung der Vorspannkraft der Feder 17' setzt der Teil 64 auf dem Teil 6 des Relaiskolbens 4 auf, so daß Anschläge 18', 19' zur Wirkung bzw. zur Anlage kommen. Erst nach Verlassen des Teilbremsbereiches in Richtung auf eine Vollbremsung kommt also hier eine Übersetzung zustande, wobei sich grundsätzlich ein Kennlinienverlauf analog den Fig. 5 und 6 ergibt.

Der Teil 6 des Relaiskolbens 4 ist hier zudem noch zweiteilig ausgebildet und besteht aus den beiden Teilen 6' und 6''. Eine solche Unterteilung ist jedoch im Stand der Technik bekannt und nicht vergleichbar mit der hier aufgezeigten Unterteilung des Relaiskolbens 4 in die Teile 6 und 7 bzw. 6 und 64. Fig. 3 soll nur aufzeigen, daß der Teile 6 selbstverständlich und unabhängig von der hier vorliegenden Erfindung ebenfalls nochmals unterteilt werden kann.

Fig. 4 zeigt schließlich eine vierte Ausführungsform des Zweikreis-Bremsventils, welches in seiner Wirkung jedoch demjenigen der Fig. 3 sehr ähnlich ist. Auf die Unterteilung des Teils 6 des Relaiskolbens 4 ist hier verzichtet. Ein Teil des Relaiskolbens 4 ist hier als Membrankolben ausgebildet. Zu diesem Zweck ist eine Membran 67 in der dargestellten Weise vorgesehen, mit der steuerkammerseitig ein Gehäuserand 68 zusammenarbeitet und erst im Verlauf eines Bremshubes die Teilwirkfläche 66 wirkungsmäßig freigibt. Diese Teilwikfläche 66 kommt an einem Teller 69 unter der Membran 67 zur Wirkung, welcher über die vorgespannte Feder 17' abgestützt ist. Der Raum 23 kann hier in einfacher Weise über den Kanal 24 an die Atmosphäre angeschlossen sein.

Je nach der steuer- bzw. wiegekammerseitigen Anordnung des zweiten Teils 7 bzw. 64 des Relaiskolbens 4 können entweder die Durchmesser D1, D3 und D4 bzw. D1, D2 und D3 unabhängig voneinander konstruktiv verschieden gewählt werden, wodurch sich eine große Anzahl von unterschiedlich gestalteten Kennlinien ergibt. Besonders sinnvolle Kennlinien sind in den Fig. 5 und 6 dargestellt. Beispielsweise ist es auch möglich, D1 und D3 gleich groß auszubilden oder D3 und D2 gleich groß auszubilden, wodurch sich abgesehen von dem Bereich der Teilbremsungen parallele Kennlinienverläufe der ausgesteuerten Drücke in den Druckräumen 31 und 44 ergeben.

Bezugszeichenliste :

   1 = Gehäuse
   2 = Kolben
   3 = Doppelventilkörper
   4 = Relaiskolben
   5 = Doppelventilkörper
   6, 6', 6'' = innerer Teil des Relaiskolbens
   7 = Teil des Relaiskolbens
   8 = Dichtung
   9 = Dichtung
 10 = Teilwirkfläche
 11 = Teilwirkfläche
 12 = Dichtung
 13 = Dichtung
 14 = Teilwirkfläche
 15 = Steuerkammer
 16 = Wiegekammer
 17, 17' = vorgespannte Feder
 18, 18' = Anschlag
 19, 19' = Anschlag
 20 = Rückführfeder
 21 = Anschlagring
 22 = Bohrung
 23 = Raum
 24 = Kanal
 25 = Anschluß
 26 = Leitung
 27 = Vorratsbehälter
 28 = Vorratsbehälter
 29 = vorspringender Rand
 30 = Fortsatz
 31 = Druckkammer
 32 = Anschluß
 33 = Leitung
 34 = Bremsdruckregler
 35 = Leitung
 36 = Bremszylinder
 37 = Kanal
 38 = Anschluß
 39 = Leitung
 40 = Vorratsbehälter
 41 = Vorratskammer
 42 = eingezogener Gehäuserand
 43 = Fortsatz
 44 = Druckkammer
 45 = Anschluß
 46 = Leitung
 47 = Bremszylinder

48 = Kanal
49 = Betätigungsglied
50 = Abknickpunkt
51 = Leitung
52 = Anschluß
53 = Druckraum
54 = Fortsatz
55 = Ventilkörper
56 = Dichtung
57 = Feder
58 = Stufenkolben
59 = eingezogener Rand
60 = Bund
61 = Dichtung
62 = Dichtung
63 = Feder
64 = Teil des Relaiskolbens
65 = Dichtung
66 = Teilwirkfläche
67 = Membran
68 = Gehäuserand
69 = Teller
70, 70' = Knickpunkt

**Patentansprüche**

1. Zweikreis-Bremsventil für Fahrzeuge, insbesondere Kraftfahrzeuge, mit einem durch ein Betätigungsglied (49) betätigbaren, die Druckhöhe in einer ersten Druckkammer (31) steuernden ersten Kolben (2) und einem die Druckhöhe in einer zweiten Druckkammer (44) steuernden, in Betätigungsrichtung vom Druck der ersten Druckkammer (31) in einer Steuerkammer (15) und entgegengesetzt dazu in einer Wiegekammer (16) beaufschlagten zweiteilig ausgebildeten Relaiskolben (4), dessen Teile mit Anschlägen versehen sind, wobei die zweite Druckkammer (44) letztlich mit den Radbremszylindern der Vorderachse und die erste Druckkammer (31) letztlich mit den Radbremszylindern der Hinterachse verbindbar ist, dadurch gekennzeichnet, daß der zweite Teil (7 bzw. 64) des Relaiskolbens (4) auf einer vorgespannten Feder (17 bzw. 17') abgestützt ist und entweder wiegekammerseitig oder steuerkammerseitig eine jeweils zusätzlich zu der jeweiligen Wirkfläche (11 bzw. 10) des ersten Teils (6) des Relaiskolbens (4) vorhandene Teilwirkfläche (14 bzw. 66) aufweist, und daß die zwischen den beiden Teilen des Relaiskolbens (4) vorgesehenen Anschläge (18 ; 19 bzw. 18' ; 19') bei wiegekammerseitiger Anordnung der Teilwirkfläche (14) erst nach Überschreitung der Vorspannkraft der Fder (17) unwirksam oder bei steuerkammerseitiger Anordnung der Teilwirkfläche (66) erst nach Überschreitung der Vorspannkraft der Feder (17') wirksam werden.

2. Zweikreis-Bremsventil nach Anspruch 1, dadurch gekennzeichnet, daß bei wiegekammerseitiger Anordnung des zweiten Teils (7) des Relaiskolbens (4) der erste Teil (6) des Relaiskolbens (4) steuerkammerseitig eine größere Wirkfläche (10) als wiegekammerseitig aufweist.

3. Zweikreis-Bremsventil nach Anspruch 2, dadurch gekennzeichnet, daß die vorgespannte Feder (17) an dem ersten Teil (6) des Relaiskolbens (4) abgestützt ist.

4. Zweikreis-Bremsventil nach Anspruch 2, dadurch gekennzeichnet, daß gehäuseseitig ein Abstützring (21) zur Anlage des zweiten Teils (7) des Relaiskolbens (4) nach Überwindung der Kraft der vorgespannten Feder (17) vorgesehen ist (Fig. 1, 2).

5. Zweikreis-Bremsventil nach Anspruch 4, dadurch gekennzeichnet, daß der erste Teil (6) des Relaiskolbens (4) mit seiner steuerkammerseitigen Dichtung (9) an dem Abstützring (21) geführt ist (Fig. 1, 2).

6. Zweikreis-Bremsventil nach Anspruch 1 in Verbindung mit einem lastabhängig arbeitenden Bremsdruckregler, dadurch gekennzeichnet, daß der Abstützring (21) zugleich einen Anschlag für einen Stufenkolben (58) eines Druckuntersetzungsventils (55, 58) bildet, welches steuerkammerseitig dem Relaiskolben (4) vorgeschaltet und mit einer Wirkfläche von dem vom Bremsdruckregler (34) ausgesteuerten geregelten Bremsdruck der Hinterachse beaufschlagt ist (Fig. 2).

7. Zweikreis-Bremsventil nach Anspruch 1, dadurch gekennzeichnet, daß bei steuerkammerseitiger Anordnung des zweiten Teils (64) des Relaiskolbens (4) der erste Teil (6) des Relaiskolbens (4) steuerkammerseitig eine kleinere Wirkfläche (10) als wiegekammerseitig aufweist, und daß die vorgespannte Feder (17') gehäuseseitig abgestützt ist (Fig. 3, 4).

8. Zweikreis-Bremsventil nach Anspruch 1 und 7, dadurch gekennzeichnet, daß der Relaiskolben (4) steuerkammerseitig als Membrankolben ausgebildet ist und der zweite Teil (64) des Relaiskolbens von einem steuerkammerseitig an der Membran (67) anliegenden Gehäuserand (68) und einem die Membran auf der Rückseite abstützenden Teller (69) gebildet ist (Fig. 4).

**Claims**

1. Dual-circuit brake valve for vehicles, especially motor vehicles, with a first piston (2) actuable by means of an actuating member (49) and controlling the pressure head in a first pressure chamber (31), and with a two-part relay piston (4) which controls the pressure head in a second pressure chamber (44) and which is subjected, in the actuating direction, to the pressure of the first pressure chamber (31) in a control chamber (15) and, in the opposite direction to this, in a weighing chamber (16), and the parts of which are provided with stops, the second pressure chamber (44) finally being connectable to the wheel-brake cylinders of the front axle and the first pressure chamber (31) finally being connectable to the wheel-brake cylinders of the rear axle, characterized in that the second part (7 or 64) of the relay piston (4) is supported on a prestressed spring (17 or 17') and either on the same side as the weighing chamber or on the same side as the control chamber has in each case a part effective surface (14 or 66) in addition to the respective effective surface (11 or 10) of the first part (6) of the relay piston (4), and in that the stops (18 ; 19 or 18' ; 19') provided between the two parts of the relay piston (4) become ineffective only after the prestressing force of the spring (17) has been exceeded, when the part effective surface (14) is located on the same side as the weighing chamber, or take effect only after the prestressing force of the spring (17') has been exceeded, when the part effective surface (66) is located on the same side as the control chamber.

2. Dual-circuit brake valve according to claim 1, characterized in that, when the second part (7) of the relay piston (4) is arranged on the same side as the weighing chamber, the first part (6) of the relay piston (4) has a larger effective surface (10) on the same side as the control chamber than on the same side as the weighing chamber.

3. Dual-circuit brake valve according to claim 2, characterized in that the prestressed spring (17) is supported on the first part (6) of the relay piston (4).

4. Dual-circuit brake valve according to claim 2, characterized in that a thrust ring (21) for the second part (7) of the relay piston (4) to come up against after the force of the prestressed spring (17) has been overcome is provided on the housing (Figures 1 and 2).

5. Dual-circuit brake valve according to claim 4, characterized in that the first part (6) of the relay piston (4) is guided on the thrust ring (21) by means of its gasket (9) located on the same side as the control chamber (Figures 1 and 2).

6. Dual-circuit brake valve according to claim 1, in conjunction with a load-dependent brake-pressure regulator, characterized in that the thrust ring (21) at the same time forms a stop for a step piston (58) of a pressure-reducing valve (55, 58) which precedes the relay piston (4) on the same side as the control chamber and which, by means of an effective surface, is subjected to the regulated brake pressure of the rear axle controlled by the brake-pressure regulator (34) (Figure 2).

7. Dual-circuit brake valve according to claim 1, characterized in that, when the second part (64) of the relay piston (4) is arranged on the same side as the control chamber, the first part (6) of the relay piston (4) has a smaller effective surface (10) on the same side as the control chamber than on the same side as the weighing chamber, and in that the prestressed spring (17') is supported on the housing (Figures 3 and 4).

8. Dual-circuit brake valve according to claims 1 and 7, characterized in that, on the same side as the control chamber, the relay piston (4) is designed as a diaphragm piston, and the second part (64) of the relay piston is formed by a housing edge (68) resting against the diaphragm (67) on the same side as the control chamber and by a plate (69) supporting the diaphragm on the rear side (Figure 4).

## Revendications

1. Soupape de freinage à deux circuits pour véhicules, en particulier pour véhicules automobiles, comportant un premier piston (2), actionnable par un organe d'actionnement (49) et commandant le niveau de pression dans une première chambre de compression (31), ainsi qu'un piston relais (4) en deux parties, commandant le niveau de pression dans une deuxième chambre de compression (44) et placé, dans le sens de l'actionnement dans une chambre de commande (15) sous la pression de la première chambre de compression (31) et, à l'opposé, dans une chambre de pesée (16), ces parties du piston relais (4) étant munies de butées, cependant que la deuxième chambre de compression (44) peut communiquer finalement avec les cylindres de freins des roues de l'essieu avant et que la première chambre de compression (31) peut communiquer finalement avec les cylindres de freins des roues de l'essieu arrière, caractérisée en ce que la deuxième partie (7, 64) du piston relais (4) s'appuie sur un ressort préchargé (17, 17') et qu'elle présente, soit du côté de la chambre de pesée soit du côté de la chambre de commande, une surface active partielle (14, 66) existant chaque fois en plus de la surface active correspondante (11, 10) de la première partie (6) du piston relais (4) et que les butées (18 ; 19 et/ou 18' ; 19') prévues entre les deux parties du piston relais (4) ne deviennent inactives, en cas d'une disposition de la surface active partielle (14) du côté de la chambre de pesée, qu'après dépassement de l'effort de précharge du ressort (17) ou qu'elles ne deviennent actives, en cas d'une disposition de la surface active partielle (66) du côté de la chambre de commande, qu'après dépassement de l'effort de précharge du ressort (17').

2. Soupape de freinage à deux circuits suivant la revendication 1, caractérisé en ce qu'en cas de disposition de la deuxième partie (7) du piston relais (4) du côté de la chambre de pesée, la première partie (6) de ce piston présente, du côté de la chambre de commande, une surface active (10) plus grande que du côté de la chambre de pesée.

3. Soupape de freinage à deux circuits suivant la revendication 2, caractérisée en ce que le ressort préchargé (17) s'appuie sur la première partie (6) du piston relais (4).

4. Soupape de freinage à deux circuits suivant la revendication 2, caractérisée en ce que, du côté du corps de soupape, il est prévu une bague d'appui (21), pour la venue en butée de la deuxième partie (7) du piston relais (4), une fois que l'effort du ressort préchargé (17) est surmonté (figures 1, 2).

5. Soupape de freinage à deux circuits suivant la revendication 4, caractérisée en ce que la première partie (6) du piston relais (4) est guidée, avec son joint (9), qui est du côté de la chambre de commande, contre la bague d'appui (21) (figures 1, 2).

6. Soupape de freinage à deux circuits suivant la revendication 1, combinée à un modulateur de freinage travaillant en fonction de la charge, caractérisée en ce que la bague d'appui (21) forme en même temps une butée pour un piston étagé (58) d'une soupape de réduction de pression (55, 58), qui est placée en aval du piston relais (4), du côté de la chambre de commande et qui est soumise, avec une surface active, à la pression de freinage régulée de l'essieu arrière, qui est refoulée par le modulateur de freinage (34) (figure 2).

7. Soupape de freinage à deux circuits suivant la revendication 1, caractérisée en ce que, dans le cas d'une disposition de la deuxième partie (64) du piston relais (4) du côté de la chambre de commande, la première partie (6) de ce piston (4) présente du côté de la chambre de commande une surface active plus petite (10) que du côté de la chambre de pesée et que le ressort préchargé (17') est appuyé du côté du corps de soupape (1) (figures 3, 4).

8. Soupape de freinage à deux circuits suivant les revendications 1 et 7, caractérisée en ce que le piston relais (4) est exécuté, du côté de la chambre de commande, sous forme de piston à membrane et que la deuxième partie (64) du piston relais est formée par un bord (68) du corps de soupape (1), ce bord touchant la membrane (67) du côté de la chambre de commande, et par une couronne (69) soutenant, sur le dos, la membrane (figure 4).

Fig. 1

Fig. 2

Fig. 3

Fig. 4

3

Fig.5

Fig.6

4